(19) Europäisches Patentamt / European Patent Office / Office européen des brevets

(11) **EP 2 595 266 B1**

(12) **FASCICULE DE BREVET EUROPEEN**

(45) Date de publication et mention de la délivrance du brevet:
**22.08.2018 Bulletin 2018/34**

(21) Numéro de dépôt: **11306522.1**

(22) Date de dépôt: **18.11.2011**

(51) Int Cl.:
*F02C 1/00* (2006.01)   *G05F 1/10* (2006.01)
*H02J 3/30* (2006.01)   *H02J 9/06* (2006.01)
*F02C 6/14* (2006.01)

(54) **INSTALLATION DE PRODUCTION D'ÉNERGIE ÉLECTRIQUE DOTÉE DE MOYENS DE STOCKAGE D'ÉNERGIE ET PROCÉDÉ DE COMMANDE D'UNE TELLE INSTALLATION**

ANLAGE ZUR ERZEUGUNG VON ELEKTRISCHER ENERGIE, DIE MIT ENERGIESPEICHERMITTELN AUSGESTATTET IST, UND STEUERVERFAHREN EINER SOLCHEN ANLAGE

ELECTRIC POWER-FACILITY PROVIDED WITH A MEANS FOR STORING POWER AND METHOD FOR CONTROLLING SUCH A FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**22.05.2013 Bulletin 2013/21**

(73) Titulaire: **GE Energy Products France SNC 90000 Belfort (FR)**

(72) Inventeur: **Chillar, Rahul Atlanta, GA 30339 (US)**

(74) Mandataire: **Dossmann, Gérard et al Casalonga & Partners Bayerstrasse 71-73 80335 München (DE)**

(56) Documents cités:
**WO-A1-01/93410      WO-A2-2005/029667
WO-A2-2006/094128   FR-A1- 2 956 532
JP-A- 2011 182 516    US-A- 6 134 124
US-A1- 2011 175 443   US-B1- 7 573 144**

## Description

L'invention concerne, de manière générale, les installations de production d'énergie électrique et, en particulier, les centrales de production d'énergie électrique à turbine à gaz ou à cycle combiné, qui utilisent conjointement une turbine à gaz et une turbine à vapeur, qui entraînent une génératrice qui produit de l'électricité.

Les installations de production d'énergie électrique actuelles reposent principalement sur l'utilisation de centrales hydroélectriques, nucléaires ou à combustible fossile de grande envergure qui fournissent de l'électricité via des systèmes de transport et de distribution.

Les objectifs de réduction des émissions de $CO_2$ fixés dans nombreux pays, vont amener une augmentation de la part d'énergie renouvelable qui atteindra, d'ici 2020, 35% en Allemagne et 20% en France par exemple. Outre l'augmentation de leur efficacité, les sources d'énergie classiques devront augmenter leur flexibilité et leur réactivité pour être utilisées de manière plus optimale, afin d'intégrer une plus grande variété de sources électriques intermittentes, telles que les centrales éoliennes, solaires et d'autres telles que des centrales marémotrices, géothermiques ou alimentées par la biomasse. Cette diversification et l'accroissement du nombre de sources de production qu'elle implique représente ainsi un défi considérable pour les systèmes de gestion et de distribution des réseaux d'électricité.

Les moyens de générations d'énergie électrique et les réseaux de distribution actuels n'ont pas été conçus pour être soumis à ces changements, et sont ainsi inadaptés pour répondre à ces nouvelles exigences sur le long terme sans des investissements considérables.

Un tel niveau de production d'énergie renouvelable rehausse la complexité des systèmes et des réseaux de distribution d'électricité, entraînant ainsi des fluctuations énergétiques qui devront être soigneusement maîtrisées. Sans contrôle approfondi, les systèmes de distribution risquent de fonctionner de manière inefficace ou d'être soumis à des perturbations fréquentes.

Du point de vue des fournisseurs d'électricité et des opérateurs de distribution, les solutions passent par :

- L'augmentation de la flexibilité des centrales classiques ;
- L'introduction de technologies de stockage d'énergie destinées à une utilisation à tout niveau, afin d'amortir les pics de la demande et de permettre l'intégration de davantage de sources d'énergie renouvelable ;
- L'introduction de méthodes de distribution plus flexibles pour faire face aux fluctuations d'approvisionnement, accroître l'efficacité et optimiser le fonctionnement du système ;
- L'introduction de systèmes de prévision, de suivi et de contrôle puissants afin de prévenir les éventuelles perturbations.

Les perturbations susceptibles d'être engendrées par la modification annoncée des sources d'énergie électrique et des réseaux de distribution peuvent engendrer des pannes d'électricité (coupures de courant), c'est-à-dire une perte à court ou à long terme de l'énergie électrique sur une zone due à des défauts dans les centrales, des dommages au sein du système de distribution (lignes de transmission électriques ou des sous-stations), un court-circuit ou la surcharge du réseau électrique.

En particulier un « Blackout » ou perte du réseau électrique est particulièrement critique pour la sécurité publique, les hôpitaux, les usines de traitement des eaux usées, de mines, etc... D'autres systèmes critiques, tels que les systèmes de télécommunications, sont également tenus de disposer d'une source d'urgence. C'est pourquoi les installations sont dotées de générateurs de secours qui démarrent automatiquement lorsque l'alimentation électrique est perdue.

L'apparition de défauts au sein d'un réseau électrique à proximité d'une centrale de génération d'électricité de type turbine à gaz, turbine à vapeur ou cycle combiné peut aussi créer des perturbations voire provoquer l'arrêt de la centrale.

De plus, une centrale de production d'électricité prélève de l'énergie au réseau pour initier la montée en vitesse de la turbine en utilisant un alternateur en mode moteur et pour alimenter les systèmes auxiliaires de la centrale. Ces centrales doivent aussi prévoir des éléments d'alimentation de secours tels que des batteries ou des moteurs diesels afin de supporter des microcoupures de quelques secondes ou assurer l'arrêt normal et éventuellement le redémarrage en cas de perte du réseau.

Des capacités de stockage d'énergie réparties sur le réseau peuvent permettre de réguler les variations de fréquence, d'ajuster rapidement l'énergie fournie à la demande, de supporter la production très fluctuante des centrales électriques fonctionnant grâce à des sources renouvelables et de fournir une énergie de secours après une panne de courant.

Par ailleurs, la régulation de fréquence est un service destiné à réduire les écarts de fréquences sur les réseaux. Les écarts de fréquence résultent de déséquilibres entre l'offre et la demande d'électricité qui se produisent en permanence pendant le fonctionnement normal du système ou après un incident comme une perte de production. La fréquence nominale en Europe est fixée à 50.00Hz. La fréquence minimale instantanée est définie à 49,2 Hz et la fréquence maximale instantanée est définie à 50,8 Hz. Cela correspond à un écart de 800 mHz, écart maximal de fréquence admissible dynamique de la fréquence nominale (ENTSO-E 2009). En pratique, les plages instantanées sont plus larges de 46Hz à 52.5Hz.

Il y existe trois niveaux de contrôle de fréquence, à savoir le contrôle primaire, le contrôle secondaire et le contrôle tertiaire.

Les centrales de production d'électricité sont tenues de prévoir une réserve lors du fonctionnement nominal afin d'assurer une réponse primaire de régulation de fréquence. En Europe, cette réserve peut varier selon les pays. Elle est par exemple de +/- 2,5% en France et de +/- 1,5% en Espagne.

L'activation de la réserve primaire est déclenchée avant que la déviation de fréquence par rapport à la fréquence nominale soit supérieure à 200 mHz et cela dans un temps minimum inférieur à 30 secondes et pour une durée maximale de 15 min.

L'utilisation de moyens de stockage d'énergie permet donc également de contribuer à réguler la fréquence, en service continu et avec une réponse rapide.

Il convient enfin de réguler le déphasage entre la tension et le courant, qui se traduit par un contrôle de la puissance réactive. Les charges comprenant des bobinages ont un effet magnétisant produisant de la puissance réactive. Cette dernière ne fournit pas de travail, mais sommée vectoriellement avec la puissance active (puissance facturée), elle compose la puissance apparente laquelle définit la totalité de l'énergie circulant sur le réseau ainsi que le dimensionnement des installations. En optimisant le facteur de puissance, on peut réduire les pertes sur le réseau, maximiser le flux de puissance active (ou le dimensionnement des installations moindre) et augmenter la stabilité. Là encore, les moyens de stockage d'énergie peuvent être utilisés pour réguler ce déphasage.

Les moyens de stockage peuvent également servir de sources énergétiques requises lors du démarrage des centrales (absorption des pics de puissance, ..) et en évitant les microcoupures néfastes à l'alimentation continue nécessaire aux hôpitaux, aux centres informatiques et aux systèmes de secours des centrales nucléaires.

C'est dans ce contexte que s'inscrivent les moyens de stockage d'énergie cinétique ou volants d'inertie. Ces systèmes, assimilables à une batterie mécanique, consistent en la mise en rotation d'un volant (fibres de carbone, autres composites, acier, ..), jusqu'à plusieurs dizaines de milliers de tours par minute, couplé à un moteur/générateur. Ils emmagasinent/délivrent l'énergie électrique en surplus/déficit sur le réseau, à un moment donné, sous forme d'énergie cinétique ($E_k$) qui est récupérée en accélérant/décélérant la masse. L'énergie stockée/restituée est donnée par la formule suivante :

$$E_k = \frac{1}{2} \cdot J \cdot \omega^2$$

Où $J$ est le moment d'inertie (en kg.m²) et $\omega$ est la vitesse angulaire (en rad.s⁻¹).

Afin d'éviter les pertes par frottements, ces systèmes de stockage sont soutenus par des paliers magnétiques et confinés dans une enceinte sous vide. Ils comportent également des dispositifs d'électronique de puissance tel qu'une combinaison redresseur-onduleur afin d'assurer le contrôle du signal injecté/soustrait au réseau et, notamment, le contrôle du facteur de puissance (cosφ).

Cette technologie est utilisée, entre autres, pour la régulation de fréquence, comme solution pour l'alimentation sans interruption, pour l'optimisation énergétique dans les systèmes embarqués, dans des domaines tels que la distribution électrique, l'aérospatial, l'automobile (récupération de l'énergie cinétique au freinage), le domaine ferroviaire, ...

Dans le cadre de la distribution d'énergie électrique et de la stabilité des réseaux électriques, ces systèmes de stockage sont très avantageux car ils possèdent un temps de réponse inférieur à la seconde, une durée de vie d'une vingtaine d'années, avec peu de maintenance. En outre, et contrairement aux batteries, ils ne possèdent pas d' « effet mémoire », ils ne craignent pas les variations de température et leur état de charge est précisément évaluable. Enfin ils ne nécessitent pas de recyclage, ni de précaution de fonctionnement particulière.

Actuellement et à titre de référence, certains de ces dispositifs, tels que commercialisés à présent, ont un rendement mécanique de plus de 95% et un rendement global (aller-retour charge/décharge) de 85%. Certains peuvent atteindre une capacité de stockage de 25kWh, délivrer une puissance instantanée de 250kW et subir plus de 150000 cycles complets de charge/décharge.

On connaît, dans l'état de la technique, divers types de systèmes permettant d'éviter les interruptions de fourniture d'électricité et, de réguler la fréquence et la puissance.

On pourra à cet égard se référer aux documents EP 1 900 074 et EP 1 866 717 qui décrivent divers types de systèmes d'alimentation pour compenser les pics de consommation et empêcher des interruptions de service.

Le document EP 1 866 717 préconise notamment l'utilisation d'un mini-réseau, comprenant une ou plusieurs sources de production d'électricité et une ou plusieurs charges indépendantes, qui peut être connecté au réseau électrique en réponse à une perturbation.

Les documents US 2005 0035744, EP 1 656 722, EP 359 027, US 5 256 907, WO 2002 44555, US 4 001 666, JP 2003 274562 décrivent, quant à eux, l'utilisation de volants d'inertie.

On pourra également se référer au document US 2004 0263116 qui décrit un système intelligent de distribution/stockage d'énergie pour la gestion de la puissance du côté de la demande. On utilise un dispositif qui permet de stocker l'énergie électrique à proximité du point d'utilisation ou de production. Le document JP 2003 339118 décrit un système d'alimentation d'énergie distribuée comprenant une unité de production d'énergie éolienne, une unité de production photovoltaïque, une unité de stockage d'énergie, un volant d'inertie et une unité de charge.

Les documents US 7 573 144, WO 01/93410, US 2011/175443 et US 6 134 124 divulguent des installations de production d'énergie électrique selon le préambule de la revendication 1.

Le document FR 2 956 532 adresse la gestion du niveau de réserve primaire disponible dans l'installation de production d'énergie électrique basée sur la fréquence du réseau.

Au vu de ce qui précède, la présente invention propose un procédé de contrôle d'une centrale de production d'électricité de type turbine à gaz ou à cycle combiné qui permet de pallier les inconvénients précités.

En effet, une centrale d'énergie à turbine à gaz/turbine vapeur ou à cycle combiné produit directement de l'électricité. Cependant elle est dépendante de l'électricité du réseau pour assurer son démarrage en alimentant l'alternateur en mode moteur (pour une turbine gaz) ainsi que pour assurer l'alimentation de systèmes auxiliaires nécessaires pour entraîner des circuits de lubrification, d'alimentation en combustible et de refroidissement, de réchauffage et de vide du condenseur, ces circuits étant souvent composés par des groupes motopompes et moto-ventilateurs, vannes etc...

Ces équipements doivent être pourvus d'une redondance d'alimentation en cas d'absence ou en cas de défaut du réseau.

Comme indiqué précédemment, il existe à présent plusieurs moyens de stockage d'énergie électrique nécessaires pour assurer le fonctionnement ou l'arrêt de centrales productrices d'électricité telles que les centrales à turbines à gaz/turbines à vapeur et les centrales à cycle combiné. Ces moyens permettent d'assurer le transfert de charge, de pompes, ventilateurs, armoires, en cas de défaut du réseau ou de la centrale, pour l'alimentation en basse et moyenne tension, vers des batteries.

Lors de la perte ou « blackout » du réseau, des moyens de génération de secours doivent être prévus afin de permettre aux systèmes auxiliaires en haute et moyenne tension d'assurer un éventuel arrêt de la ligne d'arbre et/ou l'éventuel démarrage de l'alternateur en mode de sécurité.

Typiquement ces moyens comprennent des moteurs diesels, dont certains sont redondants, lesquels doivent être en continu préchauffés et pré lubrifiés afin d'être prêts au démarrage. De plus, et par de mesure de sécurité, ces moteurs doivent suivre des tests réguliers de démarrage.

L'investissement, l'installation, l'alimentation et le conditionnement de ces moyens de stockage et de génération est considérable pour une utilisation parfois très sporadique.

De plus, la dégradation des batteries dans le temps est généralement régulière dans la mesure où cette dégradation intervient à chaque cycle de charge et décharge (hystérésis).

Un autre problème est le temps de réaction de ces moyens de stockage et de génération, la limitation de ce temps de réaction permettant de limiter l'impact du défaut sur le réseau et la centrale.

Selon l'un de ses aspects, l'invention propose une installation de production d'énergie électrique et un procédé de contrôle d'une telle installation qui utilise un moyen de stockage d'énergie de type volant d'inertie afin d'assurer les fonctions suivantes :

- Régulation de fréquence et de tension (en régime permanent et transitoire) ;
- Support des microcoupures de réseaux ;
- Garantie d'un état de charge optimale du moyen de stockage en cas de coupure ;
- Utilisation de l'énergie stockée sous forme mécanique pour supporter l'arrêt (dont la limitation du phénomène de survitesse de l'arbre)
- Support au démarrage de la centrale en cas de coupure prolongée du réseau.

Compensation passive ou active des harmoniques générés par les différents éléments d'électronique puissance des moyens de générations des énergies renouvelables et les moyens de stockage par volant d'inertie.

Au vu de ce qui précède, l'invention a pour objectif d'augmenter la réactivité, la flexibilité et la fiabilité de fonctionnement de centrales productrices d'électricité connectés à des réseaux ayant les caractéristiques citées précédemment

Plus particulièrement, la présente invention a pour objet une installation de production d'énergie électrique, comprenant des moyens de génération d'énergie électrique destinés à être raccordés à un réseau de distribution intégrant des moyens de stockage d'énergie électrique.

Cette installation comporte en outre un contrôleur pilotant le fonctionnement des moyens de stockage d'énergie et le raccordement des moyens de stockage audits moyens de génération et/ou audit réseau afin de maximiser leur utilisation. Le contrôleur recevant un ensemble d'informations provenant du réseau, des moyens de stockage d'énergie, des moyens de génération d'énergie électrique et du gestionnaire du réseau pour commander la production d'énergie vers le réseau et vers des systèmes auxiliaires de l'installation à partir des moyens de stockage d'énergie.

Le contrôleur est ainsi capable de recevoir des informations provenant du réseau (tension, fréquence, demande d'augmentation ou diminution de la puissance active ou réactive) et est ainsi doté de moyens lui permettant de gérer la charge et la décharge des moyens de stockage d'énergie afin de réaliser plusieurs fonctions de manière séquentielle, en assurant au préalable un niveau de charge optimale (partiel ou maximal), requis pour assurer chacune de fonctions.

L'intégration des moyens de stockage permet leur utilisation comme support de fourniture pour répondre aux pointes d'appel de courant au démarrage de la turbine à gaz. En effet, les moyens de stockage permettent de réduire la puissance nominale voire de supprimer les redondances des groupes électrogènes nécessaires aux démarrages.

Lors du démarrage, des appels de puissance sont provoqués par le démarrage des systèmes auxiliaires. Les moyens de stockage d'énergie permettent de lisser la demande de puissance active. Dans ce cas, le contrôleur doit assurer une charge maximale des moyens de stockage entre les appels de pics de puissance permettant ainsi de dimensionner le système de démarrage pour une réponse nominale inférieure à celle qui serait requise par les pics de puissance. Le dimensionnement du système de démarrage peut par exemple respecter une pente de puissance linéaire avec une pente constante.

Le contrôleur peut aussi détecter une diminution soudaine de la tension du réseau ou de la centrale en dessous d'une valeur de seuil en deçà de laquelle les systèmes auxiliaires n'assurent plus leurs fonctions correctement.

Selon une autre caractéristique de l'installation, le contrôleur est adapté pour réguler le niveau de réserve primaire disponible dans l'installation à partir de l'énergie disponible dans les moyens de stockage d'énergie.

Selon encore une autre caractéristique, le contrôleur est adapté pour commander la fourniture d'énergie électrique au réseau à partir des moyens de stockage d'énergie en réponse à une demande du gestionnaire du réseau

Le contrôleur peut être adapté pour participer à réguler la fréquence du réseau selon la demande du gestionnaire du réseau et l'énergie disponible dans les moyens de stockage d'énergie.

Le contrôleur peut encore être adapté pour commander la fourniture d'énergie électrique aux systèmes auxiliaires de la centrale à partir des moyens de stockage d'énergie en cas de chute de la tension pendant une durée prédéterminée.

Par exemple, les moyens de génération d'énergie électrique comprenant un alternateur couplé à une turbine à gaz ou à vapeur, le contrôleur est adapté pour provoquer la charge des moyens de stockage d'énergie, à l'arrêt des moyens de génération d'énergie électrique, à partir de l'inertie d'une ligne d'arbre des moyens de génération d'énergie électrique.

Dans un mode de réalisation, le contrôleur est adapté pour réguler le niveau de puissance active et/ou réactive à fournir au réseau à partir de l'énergie disponible dans les moyens de stockage d'énergie.

Par exemple, les moyens de stockage d'énergie comprennent un ensemble d'au moins un volant d'inertie couplé à un moteur /générateur et/ou un ensemble de batteries.

Afin d'entretenir la rotation du volant d'inertie, on peut utiliser un ensemble de sources d'énergie électrique auxiliaires, par exemple de type batteries ou à énergies renouvelables. connectées à leur dispositifs d'électronique de puissance associés, et adaptées pour entretenir la rotation du volant d'inertie chargé.

Par exemple, les moyens de stockage d'énergie comprennent des dispositifs d'électronique de puissance destinés à réguler le courant, la tension et la fréquence transitant dans les moyens de stockage

L'invention a également pour objet un procédé de commande d'une installation de production d'énergie électrique comprenant des moyens de génération d'énergie électrique destinés à être raccordés à un réseau de distribution et comprenant des moyens de stockage d'énergie électrique et un contrôleur pilotant le fonctionnement des moyens de stockage d'énergie et le raccordement des moyens de stockage auxdits moyens de génération et audit réseau.

Selon une caractéristique de ce procédé, on commande la production d'énergie vers le réseau et vers des systèmes auxiliaires de l'installation à partir des moyens de stockage d'énergie, et à partir d'un ensemble d'informations provenant du réseau, des moyens de stockage d'énergie et des moyens de génération d'énergie électrique, et l'on commande les moyens de stockage pour assurer différents fonctions de manière séquentielle en assurant un état de charge optimal entre deux fonctions

Dans un mode de mise en oeuvre, on régule le niveau de réserve de puissance primaire disponible dans l'installation à partir de l'énergie disponible dans les moyens de stockage d'énergie.

L'énergie fournie vers le réseau par les moyens de stockage est avantageusement la différence entre la demande en énergie d'un gestionnaire de réseau de distribution et l'énergie fournie par les moyens de génération d'énergie électrique, limitée par l'inertie de la turbine à gaz et la turbine à vapeur.

Par exemple, on régule la fréquence du réseau, à la demande d'un gestionnaire de réseau de distribution à partir de l'énergie disponible dans les moyens de stockage d'énergie.

Dans un mode de mise en oeuvre, les moyens de génération d'énergie électrique comprenant un alternateur couplé à une turbine gaz ou à vapeur, on charge les moyens de stockage d'énergie, lors de la phase d'arrêt des moyens de génération d'énergie électrique, à partir de l'inertie de la ligne d'arbre des moyens de génération d'énergie électrique.

De préférence, les moyens de stockage d'énergie sont aptes à supporter le démarrage de l'installation, limitant ainsi les appels en courant aux réseaux ou aux groupes électrogènes après coupure du réseau.

Par exemple, les moyens de stockage d'énergie sont aptes à supporter l'arrêt des moyens de génération électrique en alimentant les systèmes auxiliaires de ce dernier.

Selon encore un mode de mise en oeuvre, le contrôleur détecte/reçoit une information de chute de tension du réseau et fournit l'énergie électrique aux systèmes auxiliaires de la centrale à partir des moyens de stockage d'énergie.

On peut participer au maintien de la tension du réseau et l'on alimente en énergie électrique les systèmes auxiliaires de la centrale à partir des moyens de stockage d'énergie en cas de chute de la tension du réseau pendant une durée prédéterminée.

On peut également réguler le niveau de puissance active et/ou réactive à fournir au réseau à partir de l'énergie disponible dans les moyens de stockage d'énergie.

D'autres buts, caractéristiques et avantages de l'invention apparaîtront à la lecture de la description suivante, donnée uniquement à titre d'exemple non limitatif, et faite en référence aux dessins annexés sur lesquels :

- La figure 1 est une vue schématique d'une installation de fourniture d'énergie électrique conforme à l'invention, dotée de moyens de stockage d'énergie électrique ;
- La figure 2 est un schéma illustrant le fonctionnement du contrôleur pour satisfaire à une demande d'énergie pour le support en régulation de fréquence ;
- La figure 3 est une courbe montrant l'élévation brusque de la consommation en courant lors du démarrage de l'installation ;
- La figure 4 est une vue d'un autre mode de réalisation d'une installation de production d'énergie électrique conforme à l'invention utilisant des systèmes de production d'énergie électrique complémentaire ;
- La figure 5 est un schéma montrant un exemple de régulation de fréquence et de tension ; et
- La figure 6 est un organigramme illustrant le principe du contrôle mis en oeuvre par le contrôleur et de la gestion des moyens de stockage :
  En se référant tout d'abord à la figure 1, on va tout d'abord décrire l'architecture d'une installation de production d'énergie électrique selon l'invention.

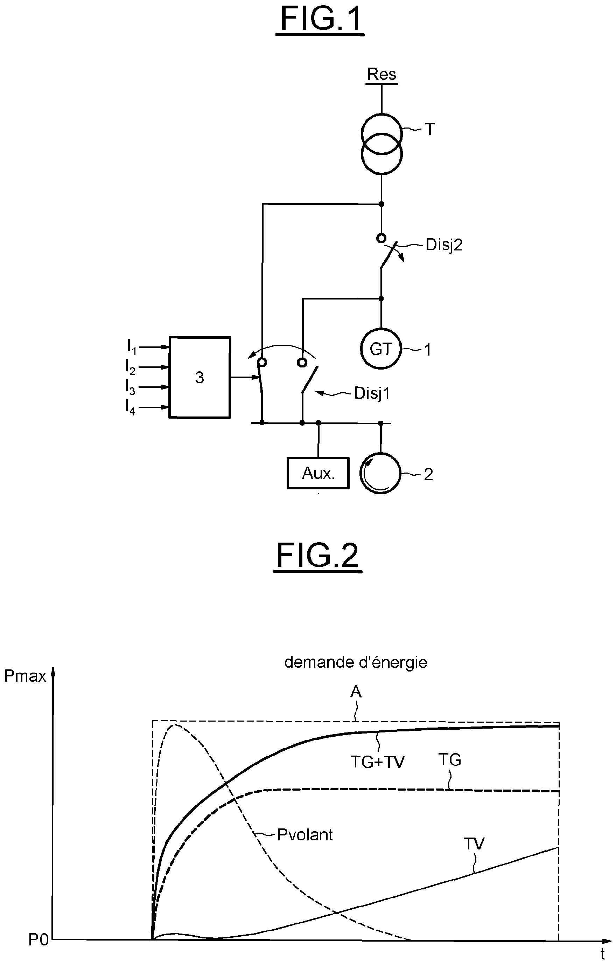

Comme le montre la figure 1, sur laquelle on a schématiquement représenté une portion d'une centrale de génération d'énergie électrique à turbine à gaz ou à cycle combiné, une telle installation de production d'énergie électrique comprend un générateur 1, par exemple une turbine à gaz, couplé à un alternateur et raccordé à un réseau de distribution *Res* par l'intermédiaire d'un transformateur T.

Lors du fonctionnement normal de la centrale, le générateur délivre une puissance électrique au réseau. Lors du démarrage, l'alternateur fonctionne en mode moteur et prélève de l'énergie sur le réseau pour entraîner la turbine.

L'installation est en outre dotée de systèmes auxiliaires *Aux,* de diverses natures, assurant l'exécution de fonctions accessoires, notamment des motopompes de lubrification et moto ventilateurs de refroidissement, des circuits d'alimentation de la turbine en carburant, un ensemble de vannes,...

Elle est par ailleurs dotée de moyens 2 de stockage d'énergie sous forme d'énergie cinétique (MSEC). Par exemple, et de manière nullement limitative, de tels moyens 2 sont agencés sous la forme d'un ensemble d'au moins un volant d'inertie, constitués, par exemple, par des volants en fibre de carbone, en matériau composite, en acier,... entraînés en rotation sous l'action d'un moteur/générateur alimenté en courant prélevé du réseau et apte à convertir l'énergie cinétique du volant en énergie électrique, et également aptes à convertir l'énergie cinétique résultant de la rotation de l'alternateur en électricité pour assurer la recharge des moyens 2 de stockage.

Comme on le voit, les systèmes auxiliaires ainsi que les moyens de stockage d'énergie sont raccordés entre le transformateur et le générateur par l'intermédiaire de disjoncteurs *Disj1* pilotés par un contrôleur 3. Comme cela sera décrit en détails par la suite, le contrôleur est raccordé aux principaux éléments de l'installation et au réseau *Res* afin, notamment de récupérer des informations relatives au fonctionnement du réseau et de l'installation. Il incorpore tous les moyens logiciels et matériels et est dûment programmé pour piloter la charge et la décharge des moyens de stockage d'énergie en fonction des informations collectées et mettre en ouvre des phases séquentielles de charge et/ou de décharge pour réaliser des fonctions de contrôle du fonctionnement de l'installation.

Un disjoncteur additionnel *Disj2* est également prévu entre le transformateur T et le générateur 1.

Le contrôleur assure la gestion du fonctionnement des moyens de stockage d'énergie cinétique afin d'assurer plusieurs fonctions nécessaires pour assurer la fiabilité et la flexibilité de la centrale face à des évènements du réseau.

Le procédé de gestion mis en oeuvre par le contrôleur est également prévu pour élargir les fonctionnalités des moyens de stockage d'énergie MSEC à des fonctions jusqu'à présent propres à la centrale. Il est en particulier destiné à solliciter les moyens de stockage d'énergie afin de répondre à la réserve primaire (totale ou partielle), en particulier dans les premiers instants de la demande supplémentaire de puissance afin de compenser la pente d'augmentation de puissance de la centrale limitée par d'accélération de la turbine à gaz, par l'inertie du cycle vapeur et par les diverses contraintes qui pèsent sur la centrale.

Cette réserve est imposée par l'opérateur du réseau électrique. Dans ce cas, la turbine à gaz/turbine à vapeur ou le cycle combiné peut être contraint de descendre son point de fonctionnement jusqu'à 95% (selon le pays) ou de fonctionner en pointe afin de fournir en cas de besoin une puissance supplémentaire.

On notera que les fonctions assurées par les moyens de stockage sont assurées de manière séquentielle, le contrôleur s'assurant de la charge optimale des moyens de stockage d'énergie entre la mise en oeuvre de deux fonctions et assurant un état de charge optimal requis au préalable à chacune des fonctions à remplir.

Le procédé mis en oeuvre par les moyens de stockage pilotés par le contrôleur permet l'utilisation des moyens de stockage de façon sporadique et permet de transférer une fonction assurée par la turbine à gaz vers les moyens de stockage, maximisant ainsi l'utilisation de la ressource.

Contrairement aux solutions selon l'état de la technique, selon lesquels il n'est pas fait de distinction spécifique entre l'utilisation de batteries et de moyens de stockage cinétique, de par les caractéristiques de charge et de recharge des moyens de stockage, leur absence d'hystérésis, les MSEC présentent des avantages importants comparés aux batteries.

L'intégration des moyens 2 de stockage d'énergie MSEC à une centrale de production d'électricité permet à cette dernière de mieux supporter des incidents du réseau à savoir : diminution importante de la tension, la perte du réseau (désignée par le terme de « blackout »).

Par ailleurs les moyens de stockage d'énergie MSEC peuvent se substituer à la centrale pour assurer la réserve primaire ou le support au démarrage pour effacer les pics d'appel de courant lors du démarrage de pompes de recirculation ou de démarrage de l'alternateur. En effet, les moyens 2 de stockage d'énergie MSEC permettent de lisser la demande de puissance active nécessaire au démarrage.

L'invention propose ainsi un moyen pour maximiser l'utilisation des moyens 2 de stockage d'énergie MSEC couplés à une centrale de génération d'électricité à turbine à gaz ou à cycle combiné.

Comme on le voit sur la figure 1, le contrôleur reçoit, en entrée, un ensemble d'informations I1 provenant du réseau *Res.*

Il reçoit également des informations I2 liées au fonctionnement des moyens 2 de stockage d'énergie, des informations I3, provenant de la centrale de production d'énergie électrique, et des informations I4 provenant du gestionnaire du réseau.

On prévoira avantageusement des moyens de communication permettant d'établir une communication entre l'opérateur du réseau, la centrale et les moyens 2 de stockage d'énergie.

Parmi les informations transmises, le contrôleur reçoit des informations de l'opérateur du réseau, et notamment : la fréquence, la tension, la demande de puissance active à fournir pour réguler la fréquence du réseau ou la demande de régulation pour la puissance réactive. Il reçoit également des informations de la centrale et notamment : le niveau de réserve primaire disponible dans la centrale et le MSEC.

A partir de ces informations et des informations provenant de la centrale, le contrôleur gère le niveau de charge et la recharge des moyens 2 de stockage d'énergie MSEC.

Le contrôleur gère la demande d'énergie nécessaire au démarrage et le système auxiliaire de démarrage, ainsi que la régulation de la puissance réactive dans le réseau de moyenne tension de la centrale.

Le contrôleur assure également le fonctionnement du disjoncteur *Disj2* qui permet de connecter/déconnecter l'alternateur du réseau principal *Res.*

La première fonction à assurer par les moyens 2 de stockage d'énergie cinétique est celle qui consiste à assurer la réserve primaire, raison pour laquelle la turbine doit fonctionner par exemple au maximum à 95% de sa puissance nominale (si non-fonctionnement en pointe). La réserve doit être fournie au réseau à la demande de l'opérateur du réseau, qui dispose ainsi d'une réserve d'énergie en cas de défaillance des systèmes de génération d'électricité. Cette réserve contribue ainsi à la stabilité du réseau en maintenant une fréquence autour de 50hz ou 60hz selon le type et les caractéristiques du réseau.

Dans ce cas, les moyens de stockage d'énergie cinétique peuvent répondre plus rapidement à la demande de l'opérateur du réseau, limitant éventuellement l'enchaînement global de défaillances voire en rallongeant le temps de réponse nécessaire pour d'autres générateurs du réseau.

Le contrôleur doit assurer une fourniture d'énergie en kWh ou MWh vers le réseau par une décharge rapide du moyen de stockage d'énergie cinétique, égale à la différence entre la demande d'énergie sollicitée par le gestionnaire du réseau, moins l'énergie fournie par l'alternateur de la centrale.

Comme le montre la figure 2, sur laquelle on a représenté la réponse en puissance à une consigne fournie par la centrale et sur laquelle la courbe TG désigne la puissance fournie par une turbine à gaz, la courbe TV désigne la puissance fournie par une turbine à vapeur et $P_{volant}$ correspond à la puissance fournie par les moyens 2 de stockage d'énergie, on voit que, dans tous les cas, en l'absence de moyens 2, la rampe de montée en puissance de l'installation est limitée par la rampe de montée en puissance de la turbine à gaz plus celle de la turbine à vapeur. Or, la montée en puissance d'une centrale est non seulement dépendante de la taille de la centrale, du type de turbine à gaz, mais est également limitée par l'inertie du cycle vapeur. Pour de grosses centrales, cette pente peut être typiquement de l'ordre de 10 à 25MW par minute, voire plus pour les centrales de dernière génération.

Ainsi, l'utilisation des moyens 2 de stockage d'énergie permet de procurer une élévation momentanée et brusque de la puissance, permettant ainsi d'améliorer la pente d'accroissement de la puissance délivrée par la centrale et son temps de réaction et, par conséquent de répondre de façon précise à la demande (courbe A).

On notera que l'utilisation des moyens de stockage d'énergie cinétique pour réaliser en partie cette fonction, présente plusieurs avantages :

- Réponse rapide aux demandes de réserve primaire ;
- Possibilité d'augmenter momentanément le point de fonctionnement de la machine, car la réserve primaire peut être assurée totalement ou partiellement par le moyen de stockage ;
- Diminution du recours à la pointe. Lorsque la demande peut être assurée uniquement par le moyen de stockage, ceci permet limiter les cycles de maintenance par la réduction des heures de fonctionnement en « overfiring », c'est-à-dire dans un fonctionnement autorisant une température d'échappement plus haute, et donc une température de flamme plus haute, qui permet une hausse de la puissance de base de 3 à 7% (selon le type de combustion), mais qui détériore l'installation.

Après chaque réponse du contrôleur tendant à satisfaire la réserve primaire en sollicitant les moyens de stockage, le contrôleur provoque une recharge des moyens de stockage, en commandant les disjoncteurs *Disj1* de manière à raccorder les moyens de stockage au réseau et alimenter le moteur lié aux moyens de stockage.

La recharge est faite dans l'instant qui suit chaque sollicitation des moyens de stockage, à partir de l'électricité du réseau ou à un moment où le gestionnaire du réseau demande d'absorber de la puissance active du réseau afin de diminuer la fréquence du réseau.

Les moyens de stockage doivent cependant garder à tout moment une charge minimale en cas d'une diminution soudaine de la tension du réseau. Cette charge minimale est estimée à partir de l'énergie minimale à fournir à l'ensemble des équipements susceptibles d'être perturbés par la diminution de la tension et cela pour une période de quelques secondes.

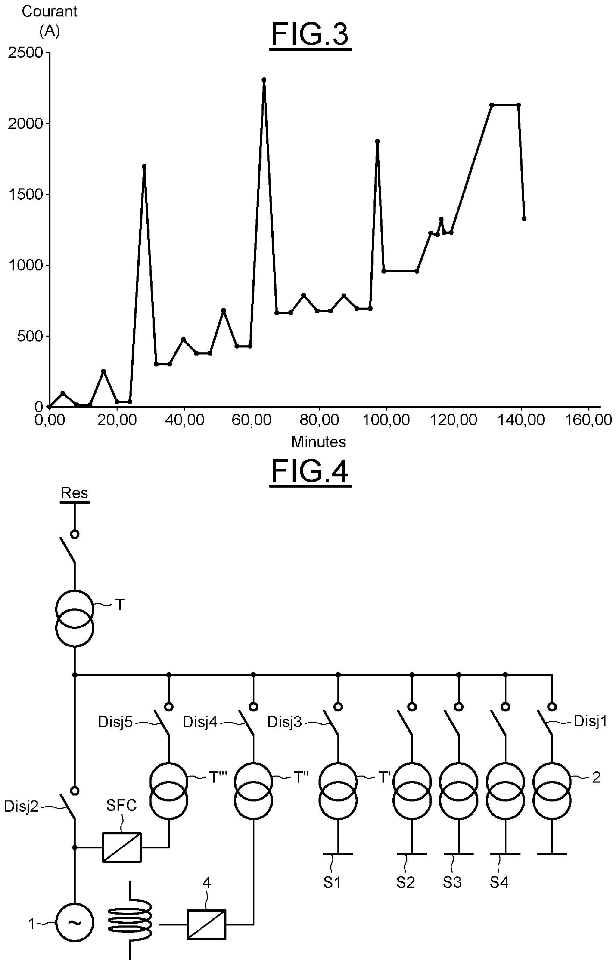

Une autre fonctionnalité assurée par le contrôleur et par les moyens de stockage concerne le support au démarrage de la turbine à gaz. Ce support permet de redimensionner les systèmes de génération d'électricité nécessaires pour fournir un courant, indépendamment du réseau, pour le démarrage en cas de « blackout ». Dans ce cas, et comme le montre la figure 3, la demande en courant et en puissance est caractérisée par des pics ponctuels de consommation correspondant chacun au démarrage d'un équipement de l'installation, par exemple un groupe motopompe de circulation pour la lubrification et le refroidissement ou un onduleur à commutation par la charge (LCI) nécessaires à alimentation de l'alternateur.

Dans le but de stabiliser la demande en courant des groupes de génération d'électricité de secours, le contrôleur sollicite les moyens de stockage d'énergie de manière à fournir avec un temps de réponse accru la demande en électricité résultant du démarrage de ces équipements. Ainsi les moyens de génération électrique de secours peuvent être redimensionnés.

Par ailleurs, à l'arrêt de la turbine, le contrôleur pilote les disjoncteurs *Disj1* et *Disj2* de manière à raccorder l'alternateur aux moyens 2 de stockage. L'élévation de la vitesse de rotation de l'alternateur, convertie en électricité par le moteur/générateur qui leur est associé, est alors utilisée pour recharger les moyens 2 de stockage afin d'assurer leur recharge totale. La recharge des moyens de stockage est ainsi réalisée lors des phases d'arrêt en utilisant l'énergie cinétique de la ligne d'arbre du générateur 1, limitant par la même occasion la survitesse provoquée par une déconnexion éventuelle et soudaine de l'alternateur.

L'énergie cinétique ainsi stockée peut être entretenue pour une période indéfinie, les pertes représentant seulement 2% de la puissance nominale, en utilisant d'autres moyens alternatifs de génération d'énergie électrique proches de la centrale, fondés par exemple sur l'utilisation d'une énergie renouvelable, ou fondés sur l'utilisation de batteries ou encore de moyens de génération de secours tels que des moteurs diesels utilisés classiquement pour l'arrêt normal ou le démarrage de l'installation en toute sécurité. Toutefois, à tout moment, les moyens 2 de stockage inertiels peuvent être chargés directement à partir du réseau dès que celui-ci est à nouveau disponible pour délivrer de l'électricité. On a représenté sur la figure 4 une installation dotée de tels moyens de génération d'énergie électrique de secours.

Comme on le voit sur cette figure 4, sur laquelle on reconnait le transformateur T raccordé aux réseaux *Res* par l'intermédiaire d'un disjoncteur *Disj2*, l'alternateur 1 associé à son générateur d'énergie électrique et les moyens 2 de stockage d'énergie électrique sous forme d'énergie cinétique, on voit que le réseau moyenne tension MV est doté d'un certain nombre de sources d'énergie additionnelle, telles que S1, S2, S3 et S4, constituées par exemple par des systèmes de conversion d'énergie renouvelable, par exemple solaire, éolienne, .., raccordés au réseau MV par des transformateurs, tel que T', et par des *Disj3* également pilotés par le contrôleur 3 (non représenté sur cette figure).

Comme on le voit, le réseau moyenne tension MV est également doté d'un excitateur 4 de l'alternateur, associé à un transformateur T" et à un disjoncteur *Disj4* ainsi qu'un convertisseur statique de fréquence SFC également associé à un transformateur T'" et à un disjoncteur *Disj5.*

Les moyens de stockage inertiels peuvent, lors du redémarrage de la turbine à gaz/turbine à vapeur, et lors de son cycle de fonctionnement combiné, servir de support pour effacer les pointes de courant lors du démarrage de pompes, en particulier celles de recirculation, et lors de l'alimentation des onduleurs à commutation par la charge LCI. Les moyens de stockage permettent ainsi de réduire la puissance nominale des moteurs diesels utilisés classiquement pour le redémarrage de la turbine, voire de délivrer de l'énergie dans les premiers instants du démarrage, ce qui permet de disposer de suffisamment de temps de démarrer lesdits moteurs, évitant ainsi de les préchauffer ou de les pré-lubrifier en continu.

Le système de stockage permet ainsi de lisser la demande de puissance active. Dans ce cas, le contrôleur gère l'énergie à délivrer dans des périodes très courtes permettant ainsi de pouvoir répondre à tous les pics de consommation.

Le dimensionnement du système de démarrage de l'installation peut alors être réalisé de manière à respecter une pente de puissance constante, pour un appel de puissance limité.

En ce qui concerne le dimensionnement des moyens 2 de stockage d'énergie, trois critères peuvent être retenus.

Il peut s'agir, en premier lieu, d'effacer les pics de consommation résultant du démarrage des équipements de l'installation, comme indiqué précédemment en référence à la figure 3.

Il peut également s'agir de limiter la puissance maximale du groupe de motorisation diesel dont est classiquement dotée l'installation.

Il peut enfin s'agir de limiter les contraintes du groupe électrogène de générations de secours, en lui assurant une augmentation en puissance constante (« ramping »).

Comme indiqué précédemment, en cas de perte du réseau ou de « blackout », le contrôleur 2 pilote le disjoncteur additionnel *Disj2* de manière à déconnecter l'alternateur du réseau et provoquer son arrêt dans un mode dit de « sécurité ». Il pilote en outre les disjoncteurs *Disj1* de manière à connecter l'alternateur 1 aux moyens 2 de stockage d'énergie.

L'élévation brusque de la vitesse de la ligne d'arbre, convertie en énergie électrique par le moteur/générateur qui lui est associé, est utilisée pour recharger les moyens 2 de stockage. Les moyens de stockage peuvent ainsi être complètement chargés en quelques secondes grâce à l'inertie provoquée par la survitesse.

Ce système de rechargement des moyens de stockage est avantageux par rapport aux systèmes classiques, fondés par exemple sur l'utilisation de moteurs diesels, ces derniers devant être constamment pré-lubrifiés et préchauffés afin de pouvoir démarrer rapidement.

Ces inconvénients sont évités par l'utilisation d'un système de stockage d'énergie cinétique qui, au moment du blackout, est chargé et détourné par le contrôleur afin d'assurer l'alimentation des auxiliaires pour la séquence d'arrêt, qui dure environ 10 min.

Par ailleurs, dans le cas d'une défaillance ou d'une indisponibilité du moteur diesel de secours, qui équipe classiquement les centrales pour fournir l'énergie électrique pour l'arrêt des équipements en toute sécurité, les moyens 2 de stockage inertiels peuvent également être commandés pour prendre le relais lors de l'arrêt normal de la machine et alimenter les auxiliaires essentiels tels que les circuits de lubrification et de refroidissement nécessaires pour assurer l'arrêt de la machine dans de bonnes conditions.

Le contrôleur peut également être adapté pour détecter une diminution soudaine de la tension du réseau auquel la centrale de production d'électricité est connectée au-dessous d'une valeur de seuil. Il s'agit par exemple de détecter une chute de tension pendant une période de temps d'au moins 2 secondes. Dans ce cas, le contrôleur 3 pilote les disjoncteurs *Disj1* et les moyens de stockage d'énergie de manière à conserver une charge minimale dans les moyens 2 de stockage nécessaire pour alimenter des composants trop sensibles aux diminutions de tension.

On notera par ailleurs que la présente invention propose un procédé de commande d'une installation de production d'énergie électrique à turbine à gaz ou à cycle combiné qui permette de mettre en oeuvre une régulation en fréquence, ou une régulation de tension, en régime permanent ou transitoire.

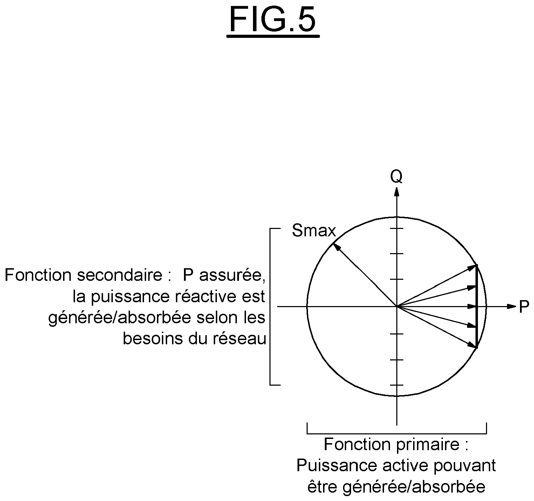

En se référant à la figure 5, les deux régulations peuvent être combinées sous le contrôle d'un contrôleur de manière à fournir, en premier lieu de la puissance active ou absorber de la puissance active P en pilotant la charge et la décharge des moyens de stockage d'énergie et, en second lieu, une fois que le niveau de puissance active est assuré, assurer une fonction secondaire consistant à fournir ou absorber de la puissance réactive Q sur le réseau.

On notera que ces deux types de régulations peuvent être simultanément optimisés par contrôle. On prendra l'exemple d'une restriction de la puissance active maximale délivrable/absorbable à environ 13,4%, ce qui permet de générer une puissance réactive (inductive ou capacitive) pouvant atteindre 50% de la puissance apparente maximale.

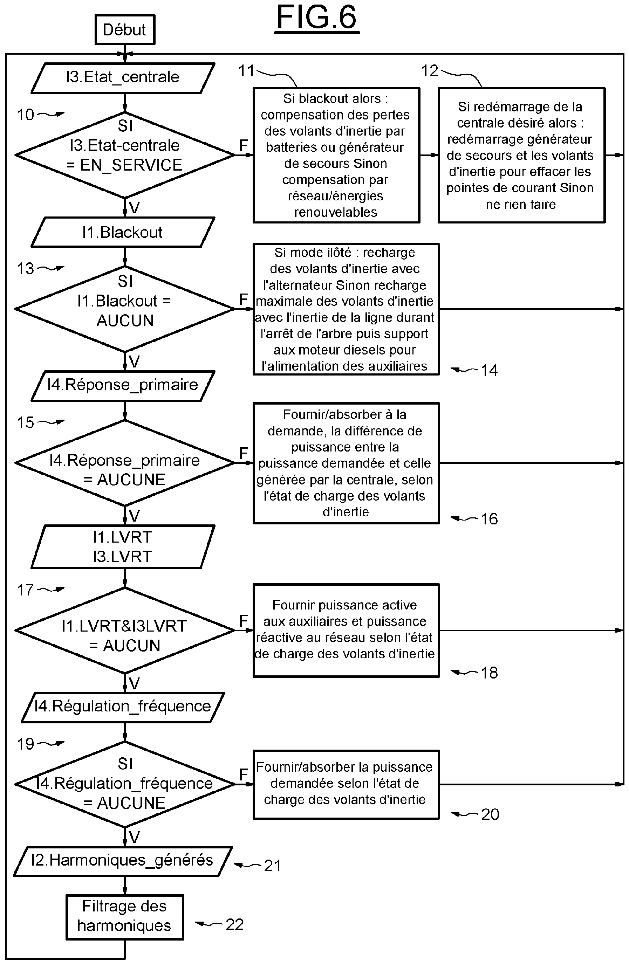

On pourra enfin se référer à la figure 6 qui est une représentation de principe du procédé mis en oeuvre par le contrôleur sous forme de schéma logique, nullement limitatif, et qui représente les différentes fonctions à assurer selon les informations reçues par le contrôleur, ainsi que la gestion des moyens de stockage d'énergie pour la charge, la décharge de ces moyens de stockage et leur connexion au réseau de distribution ou au réseau de la centrale.

Comme on le voit sur cette figure, au cours d'une première étape, on surveille l'état de la centrale (étape 10), par exemple à partir du contrôle de la valeur d'une variable *Plant-state.* On vérifie par exemple si l'alternateur fonctionne ou est à l'arrêt. S'il est à l'arrêt, en cas de perte du réseau, détectée par exemple à partir du contrôle d'une variable *Blackout,* on maintient l'énergie stockée dans les moyens de stockage d'énergie en utilisant des batteries. Dans le cas contraire, si le réseau est maintenu, on maintient l'énergie stockée en utilisant le réseau ou des sources d'énergie secondaires, par exemple renouvelables (étape 11). Si l'on souhaite démarrer l'installation, on utilise alors l'énergie stockée dans ces moyens de stockage d'énergie (étape 12).

Si, lors de l'étape 10 précédente, il a été déterminé que la centrale est en fonctionnement, en cas de perte de réseau détectée (étape 13), on procède à la charge des moyens de stockage d'énergie à partir de l'alternateur en cas de déconnexion de l'alternateur ou, sinon, à partir de moteurs diesels (étape 14).

Lors de l'étape 15 suivante, on détecte une demande de réserve primaire, par exemple à partir du contrôle d'une variable *Primary-service.* Si une réserve primaire est demandée, on fournit ou on absorbe un niveau de puissance correspondant à la différence entre la puissance demandée et la puissance susceptible d'être délivrée par la centrale, en fonction de l'état des moyens de stockage d'énergie (étape 16). Dans le cas contraire à l'étape 17, on détecte une surtension sur le réseau et une surtension sur le réseau interne de la centrale (variable LVRT). En cas de surtension sur le réseau de distribution ou sur le réseau interne de la centrale, on délivre de la puissance aux systèmes auxiliaires ou l'on absorbe de la puissance, ainsi que de la puissance réactive pour alimenter le réseau en fonction du niveau de charge des moyens de stockage d'énergie (étape 18).

En l'absence de surtension, on détecte si une régulation de fréquence est requise (étape 19), par exemple par contrôle d'une variable *Frequency-regulation.* Si tel est le cas, on fournit ou l'on absorbe de la puissance en fonction de la régulation de fréquence requise et en fonction de l'état de charge des moyens de stockage d'énergie (étape 20).

Enfin, si aucune régulation de fréquence n'est requise, lors de l'étape 21 suivante, des valeurs d'harmoniques sont générées et les harmoniques sont filtrées (étape 22). Le procédé retourne alors à l'étape 10 précédente pour surveiller l'état de la centrale.

**Revendications**

1. Installation de production d'énergie électrique, comprenant des moyens de génération d'énergie électrique, de type turbine à gaz, turbine à vapeur, cycle combiné, couplé à un alternateur, ou des sources d'énergies renouvelables destinés à être raccordés à un réseau de distribution (*Res*) et comprenant des moyens de stockage d'énergie cinétique et électrique (2) ainsi que des moyens de génération d'énergie électrique de secours, **caractérisée en ce qu'**elle comporte en outre un contrôleur (3) pilotant le fonctionnement des moyens de stockage d'énergie et le raccordement des moyens de stockage (2) audits moyens de génération et audit réseau, le contrôleur recevant un ensemble d'informations (I1, I2, I3, I4) provenant respectivement du réseau, des moyens de stockage d'énergie, des moyens de génération d'énergie électrique et du gestionnaire du réseau pour commander la production d'énergie vers le réseau et vers des systèmes auxiliaires de l'installation à partir des moyens de stockage d'énergie cinétique ou électrique, et **en ce que** le contrôleur est adapté pour réguler le niveau de réserve primaire disponible dans l'installation à partir de l'énergie disponible dans les moyens de stockage d'énergie.

2. Installation selon la revendication 1, **caractérisée en ce que** le contrôleur est adapté pour commander la fourniture d'énergie électrique au réseau à partir des moyens de stockage d'énergie (2) en réponse à une demande du gestionnaire du réseau.

3. Installation selon l'une des revendications 1 et 2, **caractérisée en ce que** le contrôleur (3) est adapté pour participer à réguler la fréquence du réseau selon la demande du gestionnaire du réseau et l'énergie disponible dans les moyens de stockage d'énergie.

4. Installation selon l'une quelconque des revendications 1 à 3, **caractérisée en ce que** le contrôleur est adapté pour commander la fourniture d'énergie électrique aux systèmes auxiliaires de la centrale à partir des moyens de stockage d'énergie (2) en cas de chute de la tension pendant une durée prédéterminée.

5. Installation selon l'une des revendications 1 et 4, **caractérisée en ce que** les moyens de génération d'énergie électrique comprenant un alternateur couplé à une turbine à gaz ou à vapeur, le contrôleur est adapté pour provoquer la charge des moyens de stockage d'énergie, à l'arrêt des moyens de génération d'énergie électrique, à partir de l'inertie d'une ligne d'arbre des moyens de génération d'énergie électrique.

6. Installation selon l'une quelconque des revendications 1 à 5, **caractérisée en ce que** le contrôleur (3) est adapté pour réguler le niveau de puissance active et/ou réactive à fournir au réseau à partir de l'énergie disponible dans les moyens de stockage d'énergie.

7. Installation selon l'une quelconque des revendications 1 à 5, **caractérisée en ce que** les moyens de stockage d'énergie comprennent un ensemble d'au moins un volant d'inertie couplé à un moteur /générateur et/ou un ensemble de batteries.

8. Installation selon la revendication 7, **caractérisée en ce qu'**elle comporte un ensemble de sources d'énergie électrique auxiliaires connectées à leur dispositif d'électronique de puissance associés, adaptées pour entretenir la rotation du volant d'inertie chargé.

9. Installation selon la revendication 8, **caractérisée en ce que** les sources d'énergie électrique auxiliaires sont de type batteries ou énergies renouvelables.

**10.** Installation selon l'une quelconque des revendications 1 à 9, **caractérisée en ce que** les moyens de stockage d'énergie comprennent des dispositifs d'électronique de puissance destinés à réguler le courant, la tension et la fréquence transitant dans les moyens de stockage.

**11.** Procédé de commande d'une installation de production d'énergie électrique comprenant des moyens de génération d'énergie électrique, de type turbine à gaz, turbines à vapeur, cycle combiné, couplé à un alternateur, ou des sources d'énergies renouvelables destinés à être raccordés à un réseau de distribution (*Res*) et comprenant des moyens de stockage d'énergie électrique (2) et un contrôleur (3) pilotant le fonctionnement des moyens de stockage d'énergie et le raccordement des moyens de stockage (2) auxdits moyens de génération et audit réseau, **caractérisé en ce que** l'on commande la production d'énergie vers le réseau et vers des systèmes auxiliaires de l'installation à partir des moyens de stockage d'énergie et à partir d'un ensemble d'informations (I1, I2, 13) provenant du réseau, des moyens de stockage d'énergie et des moyens de génération d'énergie électrique, et **en ce que** l'on commande les moyens de stockage pour assurer différents fonctions de manière séquentielle en assurant un état de charge optimal entre deux fonctions, et **en ce que** l'on régule le niveau de réserve de puissance primaire disponible dans l'installation à partir de l'énergie disponible dans les moyens de stockage d'énergie.

**12.** Procédé selon la revendication 11, **caractérisé en ce que** l'énergie fournie vers le réseau par les moyens de stockage est la différence entre la demande en énergie d'un gestionnaire de réseau de distribution et l'énergie fournie par les moyens de génération d'énergie électrique, limitée par l'inertie de la turbine à gaz et la turbine à vapeur.

**13.** Procédé selon l'une des revendications 11 et 12, **caractérisé en ce que** l'on régule la fréquence du réseau, à la demande d'un gestionnaire de réseau de distribution à partir de l'énergie disponible dans les moyens de stockage d'énergie.

**14.** Procédé selon l'une quelconque des revendications 11 à 13, **caractérisé en ce que** les moyens de génération d'énergie électrique comprenant un alternateur couplé à une turbine gaz ou à vapeur, on charge les moyens de stockage d'énergie, lors de la phase d'arrêt des moyens de génération d'énergie électrique, à partir de l'inertie de la ligne d'arbre des moyens de génération d'énergie électrique.

**15.** Procédé selon l'une quelconque des revendications 11 à 14, **caractérisé en ce que** les moyens de stockage d'énergie sont aptes à supporter le démarrage de l'installation, limitant ainsi les appels en courant aux réseaux ou aux groupes électrogènes après coupure du réseau.

**16.** Procédé selon l'une quelconque des revendications 1 à 15, **caractérisé en ce que** les moyens de stockage d'énergie sont aptes à supporter l'arrêt des moyens de génération électrique en alimentant les systèmes auxiliaires de ce dernier.

**17.** Procédé selon la revendication 11 à 16, **caractérisée en ce que** le contrôleur détecte/reçoit une information de chute de tension du réseau et fournit l'énergie électrique aux systèmes auxiliaires de la centrale à partir des moyens de stockage d'énergie (2).

**18.** Procédé selon la revendication 17, **caractérisé en ce que** l'on participe au maintien de la tension du réseau et l'on alimente en énergie électrique les systèmes auxiliaires de la centrale à partir des moyens de stockage d'énergie (2) en cas de chute de la tension du réseau pendant une durée prédéterminée.

**19.** Procédé selon l'une quelconque des revendications 11 à 18, **caractérisé en ce que** l'on régule le niveau de puissance active et/ou réactive à fournir au réseau à partir de l'énergie disponible dans les moyens de stockage d'énergie.

**Patentansprüche**

**1.** Anlage zur Produktion elektrischer Energie, aufweisend Mittel zur Erzeugung elektrischer Energie, in der Art einer Gasturbine, Dampfturbine, Gas-und-Dampf-Kombinationskraftwerk, mit einem Wechselstromgenerator gekoppelt, oder erneuerbare Energien, die dazu vorgesehen sind, an ein Verteilernetz (*Res*) angeschlossen zu werden, und Mittel zur Speicherung kinetischer und elektrischer Energie (2) sowie auch Mittel zur Erzeugung elektrischer Hilfsenergie aufweisen, **dadurch gekennzeichnet, dass** sie darüber hinaus eine Steuerung (3) umfasst, mit welcher der Betrieb der Mittel zur Speicherung von Energie und der Anschluss der Mittel zur Speicherung (2) an die Mittel zur Erzeugung und an das Netz gesteuert werden, wobei die Steuerung eine Reihe von Informationen (I1, I2, I3, I4) empfängt, die jeweils aus dem Netz, den Mitteln zur Speicherung von Energie, den Mitteln zur Erzeugung elektrischer Energie und dem Betreiber des Verteilernetzes stammen, um die Produktion von Energie zu dem Netz und zu den Hilfssystemen der Anlage ausgehend von den Mitteln zur Speicherung kinetischer oder elektrischer Energie zu regeln, und dadurch, dass die Steuerung dazu eingerichtet ist, das primäre Reserveniveau zu regulieren, das in der Anlage verfügbar ist, ausgehend von der Energie, die in den Mitteln zur Speicherung von Energie verfügbar ist.

**2.** Anlage nach Anspruch 1, **dadurch gekennzeichnet, dass** die Steuerung dazu eingerichtet ist, die Lieferung elektrischer Energie an das Netz ausgehend von den Mitteln zur Speicherung von Energie (2) in Reaktion auf eine Anforderung von dem Betreiber des Verteilernetzes zu regeln.

**3.** Anlage nach einem der Ansprüche 1 und 2, **dadurch gekennzeichnet, dass** die Steuerung (3) dazu eingerichtet ist, daran beteiligt zu sein, die Frequenz des Netzes gemäß der Anforderung des Betreibers des Verteilernetzes und der Energie zu regulieren, die in den Mitteln zur Speicherung von Energie verfügbar ist.

**4.** Anlage nach irgendeinem der Ansprüche 1 bis 3, **dadurch gekennzeichnet, dass** die Steuerung dazu eingerichtet ist, die Lieferung elektrischer Energie an die Hilfssysteme der Zentrale ausgehend von den Mitteln zur Speicherung von Energie (2) im Falle eines Abfalls der Spannung während einer zuvor festgelegten Zeitdauer zu regeln.

**5.** Anlage nach einem der Ansprüche 1 und 4, **dadurch gekennzeichnet, dass** die Mittel zur Erzeugung elektrischer Energie einen Wechselstromgenerator aufweisen, der mit einer Gas- oder Dampfturbine gekoppelt ist, wobei die Steuerung dazu eingerichtet ist, die Beschickung der Mittel zur Speicherung von Energie bei Anhalten der Mittel zur Erzeugung elektrischer Energie, ausgehend von der Trägheit eines Wellenstranges der Mittel zur Erzeugung elektrischer Energie, zu bewirken.

**6.** Anlage nach irgendeinem der Ansprüche 1 bis 5, **dadurch gekennzeichnet, dass** die Steuerung (3) dazu eingerichtet ist, das aktive und/oder reaktive Leistungsniveau zu regulieren, das an das Netz ausgehend von der Energie geliefert werden soll, die in den Mitteln zur Speicherung von Energie verfügbar ist.

**7.** Anlage nach irgendeinem der Ansprüche 1 bis 5, **dadurch gekennzeichnet, dass** die Mittel zur Speicherung von Energie eine Gesamtheit von mindestens einem Schwungrad aufweisen, das mit einem Motor/Generator und/oder einem Satz von Batterien gekoppelt ist.

**8.** Anlage nach Anspruch 7, **dadurch gekennzeichnet, dass** sie eine Gesamtheit von Hilfsquellen elektrischer Energie umfasst, die mit ihrer zugeordneten elektronischen Leistungsvorrichtung verbunden sind, und die dazu eingerichtet sind, die Rotation des belasteten Schwundrads aufrechtzuerhalten.

**9.** Anlage nach Anspruch 8, **dadurch gekennzeichnet, dass** die Hilfsquellen elektrischer Energie in der Art von Batterien oder erneuerbaren Energien vorliegen.

**10.** Anlage nach irgendeinem der Ansprüche 1 bis 9, **dadurch gekennzeichnet, dass** die Mittel zur Speicherung von Energie elektronische Leistungsvorrichtungen aufweisen, die dazu vorgesehen sind, den Strom, die Spannung und die Frequenz zu regulieren, die durch die Mittel zur Speicherung hindurch gehen.

**11.** Verfahren zur Steuerung einer Anlage zur Produktion elektrischer Energie, aufweisend Mittel zur Erzeugung elektrischer Energie, in der Art einer Gasturbine, Dampfturbine, Gas-und-Dampf-Kombinationskraftwerk, mit einem Wechselstromgenerator gekoppelt, oder erneuerbare Energien, die dazu vorgesehen sind, an ein Verteilernetz (*Res*) angeschlossen zu werden, und Mittel zur Speicherung elektrischer Energie (2) und eine Steuerung (3) aufweisend, mit welcher der Betrieb der Mittel zur Speicherung von Energie und der Anschluss der Mittel zur Speicherung (2) an die Mittel zur Erzeugung und an das Netz gesteuert werden, **dadurch gekennzeichnet, dass** die Produktion von Energie zu dem Netz und zu den Hilfssystemen der Anlage ausgehend von den Mitteln zur Speicherung von Energie und ausgehend von der Gesamtheit der Informationen (I1, I2, I3) geregelt wird, die aus dem Netz, den Mitteln zur Speicherung von Energie und den Mittel zur Erzeugung elektrischer Energie stammen, und dadurch, dass die Mittel zur Speicherung gesteuert werden, um unterschiedliche Funktionen sequentiell sicher zu stellen, indem ein optimaler Ladezustand zwischen beiden Funktionen sicher gestellt wird, und dadurch, dass das Reserveniveau von primärer Leistung, das in der Anlage verfügbar ist, ausgehend von der Energie, die in den Mitteln zur Speicherung von Energie verfügbar ist, reguliert wird.

**12.** Verfahren nach Anspruch 11, **dadurch gekennzeichnet, dass** die Energie, die zu dem Netz durch die Mittel zur Speicherung geliefert wird, aus der Differenz zwischen der Energieanforderung eines Betreibers eines Verteilernetzes und der Energie besteht, die durch die Mittel zur Erzeugung elektrischer Energie geliefert wird, begrenzt durch die Trägheit der Gasturbine und der Dampfturbine.

**13.** Verfahren nach einem der Ansprüche 11 und 12, **dadurch gekennzeichnet, dass** die Frequenz des Netzes gemäß der Anforderung eines Betreibers eines Verteilernetzes ausgehend von der Energie reguliert wird, die in den Mitteln zur Speicherung von Energie verfügbar ist.

**14.** Verfahren nach irgendeinem der Ansprüche 11 bis 13, **dadurch gekennzeichnet, dass** die Mittel zur Erzeugung elektrischer Energie einen Wechselstromgenerator aufweisen, der mit einer Gas- oder Dampfturbine gekoppelt ist, die Mittel zur Speicherung von Energie während der Anhaltphase der Mittel zur Erzeugung elektrischer Energie ausgehend von der Trägheit des Wellenstranges der Mittel zur Erzeugung elektrischer Energie geladen werden.

**15.** Verfahren nach irgendeinem der Ansprüche 11 bis 14, **dadurch gekennzeichnet, dass** die Mittel zur Speicherung von Energie dazu in der Lage sind, das Anlaufen der Anlage zu unterstützen, wobei auf diese Weise die Stromspitzen im Netz und an den elektrizitätserzeugenden Aggregaten nach einem Ausfall des Netzes begrenzt werden.

**16.** Verfahren nach irgendeinem der Ansprüche 1 bis 15, **dadurch gekennzeichnet, dass** die Mittel zur Speicherung von Energie dazu in der Lage sind, das Anhalten der Mittel zur Erzeugung elektrischer Energie zu unterstützen, indem die Hilfssysteme dieser letzteren versorgt werden.

**17.** Verfahren nach dem Anspruch 11 bis 16, **dadurch gekennzeichnet, dass** die Steuerung eine Information über Spannungsabfall des Netzes detektiert/empfängt und elektrische Energie an die Hilfssysteme der Zentrale ausgehend von den Mitteln zur Speicherung von Energie (2) liefert.

**18.** Verfahren nach Anspruch 17, **dadurch gekennzeichnet, dass** an der Aufrechterhaltung der Spannung des Netzes teilgenommen wird, und die Hilfssysteme der Zentrale ausgehend von den Mitteln zur Speicherung von Energie (2) bei einem Spannungsabfall des Netzes während einer zuvor festgelegten Zeitdauer mit elektrischer Energie versorgt werden.

**19.** Verfahren nach irgendeinem der Ansprüche 11 bis 18, **dadurch gekennzeichnet, dass** das aktive und/oder reaktive Leistungsniveau reguliert wird, das an das Netz ausgehend von der Energie geliefert werden soll, die in den Mitteln zur Speicherung von Energie verfügbar ist.

**Claims**

**1.** Electricity generating installation, comprising means for the generation of electricity of the gas turbine, steam turbine or combined-cycle type, coupled to a generator, or sources of renewable energy, which are designed for connection to a distribution grid system (Res), and comprising means for the storage of kinetic energy and electrical energy (2), together with means for the standby generation of electricity, **characterized in that** the installation also comprises a controller (3) for the management of the operation of the means for energy storage and the connection of the means for storage (2) to the said means for generation and to the said grid system, whereby the controller receives a series of information (I1, 12, 13, 14) originating respectively from the grid system, the means for energy storage, the means for the generation of electricity and the grid system operator in order to control the production of electricity to be delivered to the grid system and to the auxiliary systems of the installation from the means for the storage of kinetic or electrical energy, and **in that** the controller is capable of regulating the level of primary reserve capacity available in the installation, on the basis of the energy available in the means for energy storage.

**2.** Installation according to Claim 1, **characterized in that** the controller is capable of controlling the supply of electricity to the grid system from the means for energy storage (2), in response to a request by the grid system operator.

**3.** Installation according to either of Claims 1 and 2, **characterized in that** the controller (3) is capable of participating in frequency control on the grid system, at the request of the grid system operator and subject to the energy available in the means for energy storage.

**4.** Installation according to any one of Claims 1 to 3, **characterized in that** the controller is capable of controlling the supply of electricity to the auxiliary systems of the power plant from the means for energy storage (2), in case of a voltage drop of predetermined duration.

**5.** Installation according to either of Claims 1 and 4, **characterized in that**, where the means for the generation of electricity are comprised of a generator connected to a gas turbine or a steam turbine, the controller is capable of initiating the charging of the means for energy storage, upon the shutdown of the means for the generation of electricity, from the inertia of a shaft line in the means for the generation of electricity.

**6.** Installation according to any one of Claims 1 to 5, **characterized in that** the controller (3) is capable of regulating the level of active and/or reactive power to be delivered to the grid system from the energy available in the means for energy storage.

**7.** Installation according to any one of Claims 1 to 5, **characterized in that** the means for energy storage comprise a combination of at least one flywheel connected to a motor/generator and/or a series of batteries.

8. Installation according to Claim 7, **characterized in that** it comprises a series of auxiliary electric power sources, connected to their associated power electronic component, which are capable of maintaining the rotation of the charged flywheel.

9. Installation according to Claim 8, **characterized in that** the auxiliary electric power sources are of the battery or renewable energy type.

10. Installation according to any one of Claims 1 to 9, **characterized in that** the means for energy storage comprise power electronic components for the regulation of current, voltage and frequency in the means for storage.

11. Control process for an electricity generating installation, comprising means for the generation of electricity of the gas turbine, steam turbine or combined-cycle type, coupled to a generator, or sources of renewable energy, which are designed for connection to a distribution grid system (Res), and comprising means for the storage of electrical energy (2) and a controller (3) for the management of the operation of the means for energy storage and the connection of the means for storage (2) to the said means for generation and to the said grid system, **characterized in that** the generation of electricity for delivery to the grid system and to the auxiliary systems of the installation is controlled by reference to the means for energy storage, and by reference to a series of information (II, 12, 13) originating from the grid system, the means for energy storage and the means for the generation of electricity, and **in that** the means for storage are controlled for the sequential execution of different functions, whilst maintaining an optimum state of charge between two functions, and **in that** the level of primary reserve capacity available in the installation is regulated on the basis of the energy available in the means for energy storage.

12. Process according to Claim 11, **characterized in that** the energy delivered to the grid system by the means for storage is comprised of the difference between the energy demand notified by a distribution grid system operator and the energy supplied by the means for the generation of electricity, limited by the inertia of the gas turbine and the steam turbine.

13. Process according to either of Claims 11 and 12, **characterized in that** the grid system frequency is regulated, at the request of a distribution grid system operator, using the energy available in the means for energy storage.

14. Process according to any one of Claims 11 to 13, **characterized in that**, where the means for the generation of electricity are comprised of a generator connected to a gas turbine or a steam turbine, the means for energy storage are charged, during the shutdown phase of the means for the generation of electricity, from the inertia of the shaft line in the means for the generation of electricity.

15. Process according to any one of Claims 11 to 14, **characterized in that** the means for energy storage are capable of supporting the start-up of the installation, thereby limiting any current demand on grid systems or electric generator sets further to a grid system outage.

16. Process according to any one of Claims 1 to 15, **characterized in that** the means for energy storage are capable of supporting the shutdown of the means for the generation of electricity by supplying the auxiliary systems of the latter.

17. Process according to Claim 11 to 16, **characterized in that** the controller detects/receives information on a voltage drop in the grid system, and supplies electricity to the auxiliary systems of the power plant from the means for energy storage (2).

18. Process according to Claim 17, **characterized in that** a contribution is made towards maintaining voltage on the grid system, and electricity is supplied to the power plant auxiliary system from the means for energy storage (2) in case of a voltage drop on the grid system of a predetermined duration.

19. Process according to any one of Claims 11 to 18, **characterized in that** the level of active and/or reactive power to be delivered to the grid system is regulated using the energy available in the means for energy storage.

# FIG.1

# FIG.2

demande d'énergie

## FIG.3

Courant (A)

Minutes

## FIG.4

# FIG.5

Smax

Fonction secondaire : P assurée,
la puissance réactive est
générée/absorbée selon les
besoins du réseau

Q

P

Fonction primaire :
Puissance active pouvant
être générée/absorbée

# FIG.6

Début

I3.Etat_centrale

10

SI
I3.Etat-centrale
= EN_SERVICE

11

F → Si blackout alors : compensation des pertes des volants d'inertie par batteries ou générateur de secours Sinon compensation par réseau/énergies renouvelables

12

Si redémarrage de la centrale désiré alors : redémarrage générateur de secours et les volants d'inertie pour effacer les pointes de courant Sinon ne rien faire

V

I1.Blackout

13

SI
I1.Blackout =
AUCUN

F → Si mode ilôté : recharge des volants d'inertie avec l'alternateur Sinon recharge maximale des volants d'inertie avec l'inertie de la ligne durant l'arrêt de l'arbre puis support aux moteur diesels pour l'alimentation des auxiliaires — 14

V

I4.Réponse_primaire

15

I4.Réponse_primaire
= AUCUNE

F → Fournir/absorber à la demande, la différence de puissance entre la puissance demandée et celle générée par la centrale, selon l'état de charge des volants d'inertie — 16

V

I1.LVRT
I3.LVRT

17

I1.LVRT&I3LVRT
= AUCUN

F → Fournir puissance active aux auxiliaires et puissance réactive au réseau selon l'état de charge des volants d'inertie — 18

V

I4.Régulation_fréquence

19

SI
I4.Régulation_fréquence
= AUCUNE

F → Fournir/absorber la puissance demandée selon l'état de charge des volants d'inertie — 20

V

I2.Harmoniques_générés — 21

Filtrage des harmoniques — 22

**EP 2 595 266 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1900074 A
- EP 1866717 A
- US 20050035744 A
- EP 1656722 A
- EP 359027 A
- US 5256907 A
- WO 200244555 A
- US 4001666 A
- JP 2003274562 A
- US 20040263116 A
- JP 2003339118 A
- US 7573144 B
- WO 0193410 A
- US 2011175443 A
- US 6134124 A
- FR 2956532